# EUROPÄISCHE PATENTSCHRIFT

(11) **EP 3 551 124 B1**
(45) Veröffentlichungstag und Bekanntmachung des Hinweises auf die Patenterteilung: **31.03.2021**
(21) Anmeldenummer: 17805219.7
(22) Anmeldetag: 30.11.2017
(51) Int. Cl.: A61C 8/00, A61C 13/01

(54) **ZAHNPROTHETISCHE ANORDNUNG**
DENTAL PROSTHESIS ARRANGEMENT
DISPOSITIF PROTHÉTIQUE DENTAIRE

(30) Priorität: 12.12.2016 DE 102016124012
(43) Veröffentlichungstag der Anmeldung: 16.10.2019
(73) Patentinhaber: Bredent GmbH & Co. KG, 89250 Senden (DE)
(72) Erfinder: NIEDERMEIER, Wilhelm, 50354 Hürth (DE)
(74) Vertreter: Baur & Weber Patentanwälte PartG mbB
(86) Internationale Anmeldenummer: PCT/EP2017/081005
(87) Internationale Veröffentlichungsnummer: WO 2018/108554

(56) Entgegenhaltungen:
- EP-A1- 0 896 812
- DE-U1-202013 012 204
- KR-B1- 101 669 612

## Beschreibung

Die Erfindung betrifft eine zahnprothetische Anordnung.

Der Befestigung von abnehmbarem Zahnersatz an Restzähnen oder Implantaten dienen unterschiedliche Verbindungselemente, die teils individuell hergestellt und zum anderen Teil teil- oder vollkonfektioniert zum Einsatz kommen.

Im Fall von Teilprothesen, die verloren gegangene Seitenzähne ersetzen sollen und an anterior stehenden Restzähnen oder Implantaten abgestützt werden, stellt sich die Prothesenlagerung uneinheitlich dar, da Zähne oder Implantate bei Kaubelastung eine geringere Einsinktiefe als die auf der Schleimhaut gelagerte Prothesenbasis aufweisen. Das Bewegungsverhalten (Kinematik) des Zahnersatzes wird hierdurch kompliziert und Zähne bzw. Implantate bei Verwendung immobiler Verbindungselemente erheblich auf Biegung beansprucht.

Dies führt unter materialogischer Ermüdung des Prothesenwerkstoffes zu Rissen oder Brüchen im Bereich des Zahnersatzes, seiner Konstruktionselemente oder sogar bei Zähnen oder Implantaten, auf denen der Zahnersatz gelagert ist. Das Einfügen eines geeigneten kraftbrechenden Elements im Übergangsbereich zwischen abnehmbarer Prothese und Restpfeilern verhindert die übermäßige Materialbeanspruchung.

Hierzu wurden bislang stegartige Verbindungen zwischen den Restpfeilern oder Implantaten mit Gelenkfunktion, Auflageklammern, Kugelkopfattachments, Resilienzteleskope, Federbügel oder Gelenke mit vorgegebener Bewegungsachse eingesetzt.

So zeigt die DE 35 33 395 A1 ein Implantat, welches aus einem in den Kieferknochen einbringbaren Primärteil und einem in das Primärteil einsteckbaren Sekundärteil besteht. Der Sekundärteil ist dabei geeignet einen Zahnersatz zu tragen. Um eine möglichst natürliche Beweglichkeit des Zahnersatzes zu ermöglichen, wird der Sekundärteil im Primärteil durch zwei sich in Ringnuten befindende O-Ringe getragen. Hierdurch werden okklusale, linguale, horizontale und vertikale Bewegungen ermöglicht, wobei Rotationen durch einen Vorsprung des Sekundärteiles, welcher in eine Vertiefung des Primärteiles eingreift, bis auf ein bestimmtes Maß unterbunden werden.

Die 195 09 118 A1 dagegen zeigt eine Zahnimplantatanordnung, bei der ein Aufbaukörper, welcher eine Brennkappe oder einen Kronenersatz tragen kann, mittels einer Gelenkschraube in einem Implantat verschraubt ist. Ferner befindet sich zwischen Implantat und Aufbaukörper ein Gummiring, welcher als Puffer und Dichtung angebracht ist. Durch den Gummiring und die Gelenkschraube sind also Schwenkbewegungen in eine Richtung sowie vertikale Bewegungen möglich.

Die DE 34 138 11 C1 zeigt eine Kronenbefestigungsvorrichtung für ein in einen Kiefer einsetzbares Implantat. Ein Kronenverbindungsstück sitzt dabei auf einem Pufferelement und wird über einen Steg, in welchen eine Kegelkopfschraube eingeschraubt ist, gehalten. Der feste Sitz des Kronenverbindungsstückes, sowie die Puffer- und Dichtwirkung des Pufferelementes wird dabei durch die Einschraubtiefe der Kegelkopfschraube in den Steg bestimmt.

Die EP 0 896 812 A1 beschreibt einen Implantateinsatz zum Fördern des Wachstums der Gingiva. Nach einer Zahnentfernung neigt das Zahnfleisch zum Rückzug. Der Implantateinsatz, der ein mit der Basis verbundenes Zwischenstück, eine Kappe und einen Mechanismus, um zu verhindern, dass sich die Kappe vertikal bewegt und dreht, aufweist, erleichtert das Wachstum der Gingiva nachdem ein Basisimplantat eingesetzt worden ist.

Die DE 20 2013 012 204 U1 zeigt eine zahnprothetische Anordnung mit wenigstens einem Kieferimplantat und einem Aufbau, welche in einem Verbindungsabschnitt über ein dem Kieferimplantat zugeordnetes Unterteil und ein dem Aufbau zugeordnetes Oberteil miteinander verbunden sind.

Die KR 101 669 612 B1 zeigt eine Befestigungsvorrichtung für eine Dentalstruktur mit einem Kappenelement, das in einem Verbindungsloch der Dentalstruktur aufgenommen ist; einem mittleren Element, das mit dem Kappenelement verbunden ist, und einen Fundamentpfosten.

Die aus dem Stand der Technik bekannten Lösungen weisen mitunter erhebliche strukturelle, verarbeitungstechnische, ästhetische, hygienische und belastungsspezifische Nachteile auf, die sich auf die Prognose der Versorgung mit Zahnersatz ungünstig auswirken.

Es ist daher Aufgabe der Erfindung, eine zahnprothetische Anordnung mit Präzisionseigenschaften in konfektionierter Form zu schaffen, das alle Aufgaben eines Verbindungselements in sich vereint und sowohl auf Wurzelkappen von Zähnen als auch auf Implantaten Verwendung finden kann.

Diese Aufgabe wird durch die Merkmale der Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine zahnprothetische Anordnung beschrieben, die ein Unterteil zum Einsetzen in ein Aufbauelement, das einem Mittel zur Befestigung in einem Kiefer zugeordnet ist, und ein Oberteil umfasst, welches mit einer zahnprothetischen Restauration verbindbar ist, wobei zwischen Oberteil und Unterteil ein Retentionselement angeordnet ist, so dass das Oberteil entlang einer Längsachse lösbar mit dem Unterteil verbindbar ist, wobei das Oberteil in Relation zum Unterteil zur Kraftbrechung zwischen dem Aufbauelement und der zahnprothetischen Restauration um die Längsachse kippbar ist, wobei bei einer Kippbewegung das Oberteil über ein im Unterteil ausgebildetes Befestigungselement gleitet.

Demnach wird eine zahnprothetische Anordnung beschrieben, bei der keine starre Verbindung zwischen Oberteil und Unterteil vorgesehen ist. Vielmehr wird zur Kraftbrechung eine Möglichkeit geschaffen, das Oberteil in Bezug zur Längsachse zu kippen. Dadurch werden insbesondere bei Biegebeanspruchung die von der zahnprothetischen Restauration auf das Mittel zur Befestigung im Kiefer betragenen Kräfte gebrochen. Demnach kann die Verkippung zwischen Oberteil und Unterteil zur Korrektur einer Achsdivergenz mehrerer Unterteile eingesetzt werden, so dass diese korrigiert wird, ohne dabei Kräfte auf die zahnprothetische Restauration zu übertragen. Bei Kugelkopfbefestigungen erfolgt hier das Verkippen über die als Retentionselement wirkende Kugel, die demnach sowohl bezüglich der Abzugskräfte bei der Befestigung zwischen dentaler Prothese und Kiefer als auch bezüglich der Möglichkeit des Verkippens angepasst sein muss. Im Gegensatz dazu kann bei der Erfindung jeweils das Verkippen zwischen Oberteil und Unterteil und die Befestigung zwischen Oberteil und Unterteil über das Retentionselement unabhängig voneinander gewählt und/oder optimiert werden.

Die Kippbewegung kann dabei um die Längsachse in allen Richtungen mit einem Winkel von bis zu 2° erfolgen, was deutlich geringer als der Bewegungsspielraum einer Kugelkopfbefestigung ist.

Gemäß einer Ausführungsform der Erfindung ist das Befestigungselement an seinem oberen Ende zur Unterstützung der Kippbewegung mit einer Kippfläche ausgebildet.

Demnach kann das Oberteil auf das Unterteil so eingesetzt werden, dass das obere Ende des Befestigungselements wenigstens lokal als Auflagefläche des Oberteils dient, so dass das Oberteil über die Kippfläche geführt wird, um die Kippbewegung zu unterstützen.

Gemäß einer weiteren Ausführungsform der Erfindung ist die Kippfläche konusförmig ausgebildet.

Demnach ist es möglich, dass das Oberteil gegen das Unterteil auf einfache Weise in beliebige Richtungen relativ zur Längsachse gekippt werden kann. Gemäß einer weiteren Ausführungsform der Erfindung ist eine Fläche auf einer Innenseite des Oberteils zur Kippfläche korrespondierenden ausgebildet, so dass die Kippbewegung durch Gleiten der Fläche auf der Kippfläche erfolgt.

Demnach ruht das Oberteil nicht nur lediglich lokal auf der Kippfläche des Befestigungselements, sondern gleitet über die Kippfläche. Während ein Spalt zum Ausgleich bei der Kippbewegung zwischen den Seitenflächen des Unterteils und inneren Seitenflächen des Oberteils dient, kann das Verkippen zwischen Oberteil und Unterteil durch das Gleiten zwischen den beiden Flächen unterstützt beziehungsweise geführt werden.

Gemäß einer weiteren Ausführungsform der Erfindung ist der Fläche am Oberteil ein Öffnungswinkel zuordenbar, der größer als der der Kippfläche ist.

Demnach kann das maximale Verkippen zwischen Oberteil und Unterteil durch die Ausgestaltung der Fläche und der Kippfläche begrenzt sein. Durch Bereitstellen unterschiedlicher Oberteile bzw. Unterteile mit entsprechend gewählten Flächen oder Kippflächen kann daher für die jeweilige Anwendung die passende zahnprothetische Anordnung ausgewählt werden.

Gemäß einer weiteren Ausführungsform der Erfindung ist das Retentionselement zwischen einer am Unterteil gebildeten ersten Nut und einer zugehörigen zweiten Nut am Oberteil angeordnet. Dabei kann das Retentionselement als umlaufender Ring oder als U-förmiger Bügel ausgebildet sein.

Demnach kann beispielsweise ein ringförmiges Element als Retentionselement zwischen der korrespondierenden ersten und zweiten Nut eingesetzt werden. Neben einer Ausgestaltung als ringförmiges Retentionselement ist es aber auch möglich, beispielsweise einen U-förmigen Bügelverschluss als Retentionselement vorzusehen. Die Ausgestaltung mittels korrespondierender Kehlnuten ermöglicht eine einfache aber dennoch zuverlässige Befestigung des Oberteils am Unterteil, wobei diese erst nach Überwindung einer durch das Material des Retentionselements vorgegebenen Retentionskraft gelöst werden kann. Bei Beschädigung oder Abnutzung kann das Oberteil durch den Zahnarzt gelöst und ausgewechselt werden.

Gemäß einer weiteren Ausführungsform der Erfindung ist das Befestigungselement verschraubt oder verklebt.

Das Befestigungselement kann beispielsweise als Kippbolzen bereitgestellt werden, der über sein Außengewinde in ein Innengewinde am Aufbauelement eingreift, so dass das Unterteil mit dem Aufbauelement verschraubt werden kann. Bei Beschädigung oder Abnutzung kann das Unterteil durch den Zahnarzt gelöst und ausgewechselt werden. Das Befestigungselement in Form einer Schraube dient über seine Form der besonderen kraftbrechende Wirkung, kann aber nach Lösen der Verschraubung entfernbar sein. Die Abstände und Spalte sind dabei so gewählt, dass bei Entfernen des Befestigungselements das Aufbauelement direkt auf dem Unterteil kippfrei zu liegen kommt. Falls die spätere Lösbarkeit nicht gewünscht ist, wäre auch eine Verklebung möglich.

Desweiteren kann es vorgesehen sein, das Oberteil mit einer entlang der Längsachse ausgebildeten kaminartigen Fortsetzung auszubilden.

Demnach kann das Oberteil als Basis für unterschiedliche Aufbauten von zahnprothetischen Restaurationen dienen.

Gemäß einer weiteren Ausführungsform der Erfindung ist das Aufbauelement Bestandteil eines Implantats, eines Wurzelstifts oder eines Abutments. Alternativ kann das Aufbauelement über ein abgewinkeltes Zwischenelement mit einem Implantat, einem Abutment oder einem Wurzelstift verbunden sein.

Demnach wird als Mittel zur Befestigung in einem Kiefer entweder ein Implantat, ein Abutment oder aber auch ein Wurzelstift bereitgestellt, die jeweils ein Bestandteil der erfindungsgemäßen zahnprothetischen Anordnung sein können, wobei das Aufbauelement auch über eine Zwischenelement verbunden sein kann. Das Mittel zur Befestigung in einem Kiefer somit kann auch in abgewinkelter Form vorliegen, so dass vielfältige Befestigungsmöglichkeiten innerhalb eines Kiefers geschaffen werden können.

Nachfolgend werden einige Ausführungsbeispiele anhand der Zeichnung näher erläutert. Es zeigen:
- Fig. 1: eine Querschnittsansicht einer erfindungsgemäßen zahnprothetischen Anordnung gemäß einer ersten Ausführungsform,
- Fig. 2: eine Querschnittsansicht einer erfindungsgemäßen zahnprothetischen Anordnung gemäß einer zweiten Ausführungsform,
- Fig. 3: eine Querschnittsansicht einer erfindungsgemäßen zahnprothetischen Anordnung in einer dritten Ausführungsform.

In den Figuren sind gleiche oder funktional gleich wirkende Bauteile mit den gleichen Bezugszeichen versehen.

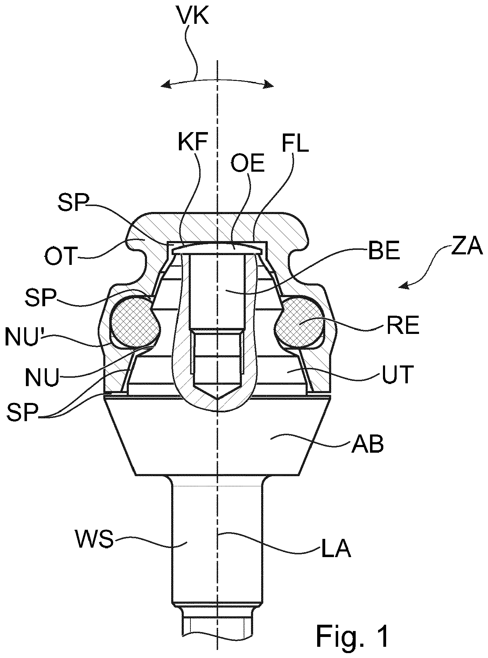

In Fig. 1 ist in einer Querschnittsansicht eine teilweise gebrochene Darstellung einer zahnprothetischen Anordnung ZA gezeigt. Auf einem Wurzelstift WS, der als Mittel zur Befestigung in einem Kiefer dient, befindet sich ein Aufbauelement AB. Das Aufbauelement AB kann zusammen mit dem Wurzelstift WS als einstückiges Bauteil gefertigt sein. Der in Fig. 1 gezeigte Aufbau ist im Wesentlichen rotationssymmetrisch um eine Längsachse LA.

Auf der dem Wurzelstift WS gegenüberliegenden Seite ist ein Unterteil UT auf dem Aufbauelement AB angeordnet. Das Unterteil UT wird auf dem Aufbauelement AB befestigt. Über eine (nicht in Fig. 1 gezeigte) Verschraubung kann eine lösbare Verbindung zwischen Unterteil UT und Aufbauelement AB geschaffen werden.

Zwischen Unterteil UT und Aufbauelement AB ist ein als Kippbolzen ausgebildetes Befestigungselement BE angeordnet. Das Befestigungselement BE kann verschraubt oder verklebt sein. In anderen Ausführungsformen wäre es möglich, dass über das Befestigungselement BE eine Befestigung des Unterteils UT auf dem Aufbauelement AB erfolgt. Das Befestigungselement BE weist auf der dem Wurzelstift WS abgewandten oberen Ende OE eine Kippfläche KF auf, die beispielsweise konusförmig ausgebildet ist.

Das Unterteil weist eine umlaufende erste Nut NU auf. Entlang der Längsachse LA kann ein Oberteil OT mit dem Unterteil UT verbunden werden. Dazu weist das Oberteil OT eine korrespondierende zweite Nut NU' auf, die auf einer Innenseite des Oberteils OT gegenüberliegend zur ersten Nut NU angeordnet ist.

Zwischen der ersten Nut NU und der zweiten Nut NU' ist ein Retentionselement RE in Form eines umlaufenden Rings oder eines U-förmigen Befestigungsbügels ausgebildet, das das Oberteil OT auf dem Unterteil UT hält.

Zwischen dem Oberteil OT und dem Unterteil UT ist ein Spalt SP ausgebildet, so dass das Oberteil OT gegen das Unterteil UT verkippt werden kann. Demnach wird ein Aufbau geschaffen, bei dem Achsdivergenzen bezüglich des Implantats IM auf einfache Weise durch Verkippen zwischen Oberteil OT und Unterteil UT ausgeglichen werden können. Das Verkippen ist in Fig. 1 mittels des Pfeils angedeutet, der die Kippbewegung VK darstellt. Die Kippbewegung VK kann um die Längsachse LA in allen Richtungen mit einem Winkel von bis zu 2° erfolgen.

Die Fläche FL am Oberteil OT gleitet dabei über die Kippfläche KF des Befestigungselements BE. Die Fläche FL auf der Innenseite des Oberteils OT kann zur Kippfläche KF korrespondierend ausgebildet sein, so dass die Kippbewegung durch Gleiten der Fläche FL auf der Kippfläche KF erfolgt. Demnach ruht das Oberteil OT nicht nur lediglich lokal auf der Kippfläche KF des Befestigungselements BE, wie in Fig. 1 gezeigt ist, sondern würde entlang der Kippfläche KF über die Fläche FL gleiten. Des Weiteren kann der Fläche FL am Oberteil OT ein Öffnungswinkel zugeordnet werden, der größer als ein Öffnungswinkel der Kippfläche KF ist.

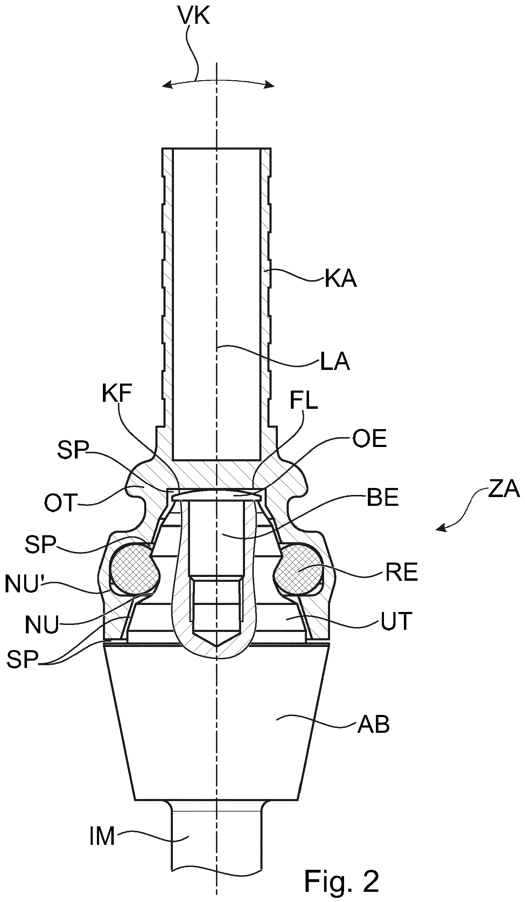

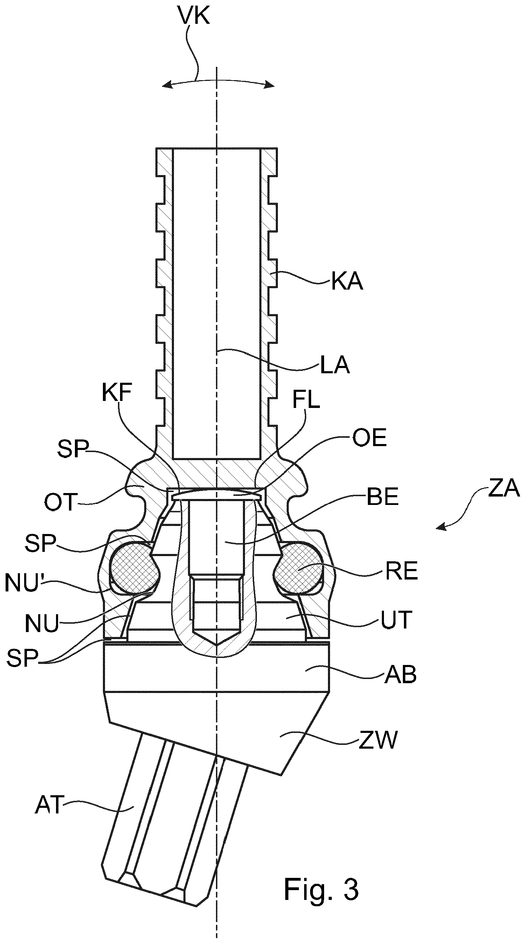

Unter Bezugnahme auf die Fig. 2 und die Fig. 3 werden nachfolgend zwei weitere Ausführungsformen beschrieben. Da diese im Wesentlichen die gleiche Funktionalität aufweisen, werden im Folgenden lediglich die Unterschiede zum Aufbau gemäß Fig. 1 hervorgehoben.

In Fig. 2 ist eine zweite Ausführungsform der erfindungsgemäßen zahnprothetischen Anordnung ZA gezeigt. Hierbei ist auf dem Oberteil OT eine kaminartige Fortsetzung KA gebildet, die als Befestigung für eine zahnprothetische Restauration herangezogen werden kann. Als Mittel zur Befestigung in einem ration herangezogen werden kann. Als Mittel zur Befestigung in einem Kiefer ist hier ein Implantat IM angedeutet.

In Fig. 3 ist eine weitere Ausführungsform der erfindungsgemäßen zahnprothetischen Anordnung ZA gezeigt. Hier ist als Mittel zur Befestigung in einem Kiefer anstelle eines Wurzelstiftes WS ein Abutment AT vorgesehen, das über ein Zwischenelement ZW einen angulierten Aufbau bildet.

### Liste der Bezugszeichen:

- AB: Aufbauelement
- AT: Abutment
- BE: Befestigungselement
- FL: Fläche
- IM: Implantat
- KA: kaminartige Fortsetzung
- KF: Kippfläche
- LA: Längsachse
- NU: erste Nut
- NU': zweite Nut
- OE: oberes Ende
- OT: Oberteil
- RE: Retentionselement
- SP: Spalt
- UT: Unterteil
- VK: Kippbewegung
- WS: Wurzelstift
- ZA: zahnprothetische Anordnung
- ZW: Zwischenelement

## Patentansprüche

1. Zahnprothetische Anordnung umfassend ein Unterteil (UT) zum Einsetzen in ein Aufbauelement (AB), das einem Mittel zur Befestigung in einem Kiefer zugeordnet ist, und ein Oberteil (OT), welches mit einer zahnprothetischen Restauration verbindbar ist, wobei zwischen Oberteil (OT) und Unterteil (UT) ein Retentionselement (RE) angeordnet ist, so dass das Oberteil (OT) entlang einer Längsachse (LA) lösbar mit dem Unterteil (UT) verbindbar ist, wobei das Oberteil (OT) in Relation zum Unterteil (UT) zur Kraftbrechung zwischen dem Aufbauelement (AB) und der zahnprothetischen Restauration um die Längsachse (LA) kippbar ist, wobei bei einer Kippbewegung (VK) das Oberteil (OT) über ein im Unterteil (UT) ausgebildetes Befestigungselement (BE) gleitet.

2. Zahnprothetische Anordnung nach Anspruch 1, bei der die Kippbewegung (VK) um die Längsachse (LA) mit einem Winkel von bis zu 2° erfolgen kann.

3. Zahnprothetische Anordnung nach Anspruch 1 oder 2, bei der das Befestigungselement (BE) an seinem oberen Ende (OE) zur Unterstützung der Kippbewegung (VK) mit einer Kippfläche (KF) ausgebildet ist.

4. Zahnprothetische Anordnung nach Anspruch 3, bei der die Kippfläche (KF) konusförmig ausgebildet ist.

5. Zahnprothetische Anordnung nach einem der Ansprüche 3 oder 4, bei der eine Fläche (FL) auf einer Innenseite des Oberteils (OT) zur Kippfläche (KF) korrespondierenden ausgebildet ist, so dass die Kippbewegung (VK) durch Gleiten der Fläche (FL) über der Kippfläche (KF) erfolgt.

6. Zahnprothetische Anordnung nach Anspruch 5, bei der der Fläche (FL) am Oberteil (OT) ein Öffnungswinkel zuordenbar ist, der größer als der der Kippfläche (KF) ist.

7. Zahnprothetische Anordnung nach einem der Ansprüche 1 bis 6, bei der das Befestigungselement (BE) verschraubt oder verklebt ist.

8. Zahnprothetische Anordnung nach einem der Ansprüche 1 bis 7, bei der das Retentionselement (RE) zwischen einer am Unterteil (UT) gebildeten ersten Nut (NU) und einer zugehörigen zweiten Nut (NU') am Oberteil (OT) angeordnet ist.

9. Zahnprothetische Anordnung nach Anspruch 8, bei der das Retentionselement (RE) als umlaufender Ring oder als U-förmiger Bügel ausgebildet ist.

10. Zahnprothetische Anordnung nach einem der Ansprüche 1 bis 9, bei der das Oberteil (OT) mit einer entlang der Längsachse (LA) ausgebildeten kaminartigen Fortsetzung (KA) gebildet ist.

11. Zahnprothetische Anordnung nach einem der Ansprüche 1 bis 10, bei der das Aufbauelement (AB) Bestandteil eines Implantats(IM), eines Wurzelstifts (WS) oder eines Abutments (AT) ist oder bei der das Aufbauelement (AB) über ein abgewinkeltes Zwischenelement (ZW) mit einem Implantat (IM), einem Abutment (AT) oder einem Wurzelstift (WS) verbunden ist.

## Claims

1. Dental prosthetic arrangement, comprising a lower part (UT) for insertion into a structural element (AB) which is assigned to a means for fastening in a jaw, and an upper part (OT) which can be connected to a dental prosthetic restoration, wherein a retention element (RE) is arranged between the upper part (OT) and the lower part (UT) such that the upper part (OT) can be releasably connected to the lower part (UT) along a longitudinal axis (LA), wherein the upper part (OT) can be tilted about the longitudinal axis (LA) in relation to the lower part (UT) in order to interrupt the force between the structural element (AB) and the dental prosthetic restoration, and wherein, during a tilting movement (VK), the upper part (OT) slides over a fastening element (BE) formed in the lower part (UT).

2. Dental prosthetic arrangement according to claim 1, wherein the tilting movement (VK) about the longitudinal axis (LA) can take place with an angle of up to 2°.

3. Dental prosthetic arrangement according to either claim 1 or claim 2, wherein the fastening element (BE) is designed with a tilting surface (KF) at its upper end (OE) in order to support the tilting movement (VK).

4. Dental prosthetic arrangement according to claim 3, wherein the tilting surface (KF) is conical.

5. Dental prosthetic arrangement according to either claim 3 or claim 4, wherein a surface (FL) is formed on an inner face of the upper part (OT) so as to correspond to the tilting surface (KF), such that the tilting movement (VK) takes place by the surface (FL) sliding over the tilting surface (KF).

6. Dental prosthetic arrangement according to claim 5, wherein the surface (FL) on the upper part (OT) can be assigned an apex angle which is greater than that of the tilting surface (KF).

7. Dental prosthetic arrangement according to any of claims 1 to 6, wherein the fastening element (BE) is screwed or glued.

8. Dental prosthetic arrangement according to any of claims 1 to 7, wherein the retention element (RE) is arranged between a first groove (NU) formed on the lower part (UT) and an associated second groove (NU') on the upper part (OT).

9. Dental prosthetic arrangement according to claim 8, wherein the retention element (RE) is designed as a circumferential ring or as a U-shaped bail.

10. Dental prosthetic arrangement according to any of claims 1 to 9, wherein the upper part (OT) is formed with a chimney-like continuation (KA) that is formed along the longitudinal axis (LA).

11. Dental prosthetic arrangement according to any of claims 1 to 10, wherein the structural element (AB) is part of an implant (IM), a root pin (WS) or an abutment (AT), or wherein the structural element (AB) is connected to an implant (IM), an abutment (AT) or a root pin (WS) via an angled intermediate element (ZW).

## Revendications

1. Dispositif prothétique dentaire comprenant une partie inférieure (UT) destinée à être insérée dans un élément structurel (AB), lequel est associé à un moyen de fixation dans une mâchoire, et une partie supérieure (OT) qui peut être reliée à une restauration prothétique dentaire, un élément de retenue (RE) étant disposé entre la partie supérieure (OT) et la partie inférieure (UT) de telle sorte que la partie supérieure (OT) peut être reliée de manière amovible à la partie inférieure (UT) le long d'un axe longitudinal (LA), la partie supérieure (OT) pouvant pivoter, par rapport à la partie inférieure (UT), autour de l'axe longitudinal (LA) entre l'élément structurel (AB) et la restauration prothétique dentaire pour la rupture de force, la partie supérieure (OT) coulissant, lors d'un mouvement de pivotement (VK), sur un élément de fixation (BE) réalisé dans la partie inférieure (UT).

2. Dispositif prothétique dentaire selon la revendication 1, dans lequel le mouvement de pivotement (VK) autour de l'axe longitudinal (LA) peut être effectué à un angle allant jusqu'à 2°.

3. Dispositif prothétique dentaire selon la revendication 1 ou 2, dans lequel l'élément de fixation (BE) est réalisé avec une surface de pivotement (KF) au niveau de son extrémité supérieure (OE), pour supporter le mouvement de pivotement (VK).

4. Dispositif prothétique dentaire selon la revendication 3, dans lequel la surface de pivotement (KF) est conique.

5. Dispositif prothétique dentaire selon l'une des revendications 3 ou 4, dans lequel une surface (FL) est réalisée sur un côté intérieur de la partie supérieure (OT), ladite surface correspondant à la surface de pivotement (KF), de sorte que le mouvement de pivotement (VK) est effectué en faisant coulisser la surface (FL) sur la surface de pivotement (KF).

6. Dispositif prothétique dentaire selon la revendication 5, dans lequel un angle d'ouverture, lequel est supérieur à celui de la surface de pivotement (KF), peut être associé à la surface (FL) sur la partie supérieure (OT).

7. Dispositif prothétique dentaire selon l'une des revendications 1 à 6, dans lequel l'élément de fixation (BE) est vissé ou collé.

8. Dispositif prothétique dentaire selon l'une des revendications 1 à 7, dans lequel l'élément de retenue (RE) est disposé entre une première rainure (NU) formée sur la partie inférieure (UT) et une seconde rainure correspondante (NU') sur la partie supérieure (OT).

9. Dispositif prothétique dentaire selon la revendication 8, dans lequel l'élément de retenue (RE) est réalisé sous la forme d'un anneau circonférentiel ou d'un étrier en forme de U.

10. Dispositif prothétique dentaire selon l'une des revendications 1 à 9, dans lequel la partie supérieure (OT) est formée avec un prolongement en forme de cheminée (KA) réalisé le long de l'axe longitudinal (LA).

11. Dispositif prothétique dentaire selon l'une des revendications 1 à 10, dans lequel l'élément structurel (AB) fait partie intégrante d'un implant (IM), d'un tenon radiculaire (WS) ou d'un pilier (AT), ou dans lequel l'élément structurel (AB) est relié, par l'intermédiaire d'un élément intermédiaire coudé (ZW), à un implant (IM), un pilier (AT) ou un tenon radiculaire (WS).
